# EUROPEAN PATENT APPLICATION

(11) **EP 4 848 549 A1**
(43) Date of publication of application: **02.12.2026**
(21) Application number: 25179298.2
(22) Date of filing: 28.05.2025
(51) Int. Cl.: H02M 1/00, H02M 3/00, H02M 3/335

(54) **ASYMMETRIC HALFBRIDGE LLC ISOLATED DC/DC CONVERTER WITH VARIABLE BURST PULSE COUNT AND VARIABLE VALLEY/PEAK COUNT QUASI-RESONANT SWITCHING**

(71) Applicant: Tridonic GmbH & Co. KG, 6851 Dornbirn (AT)
(72) Inventor: Schneider, Miguel Philipp, 6851 Dornbirn (AT); Saccavini, Lukas, 6851 Dornbirn (AT); Lochmann, Frank, 6851 Dornbirn (AT)
(74) Representative: Rupp, Christian

(57) **Abstract**

The invention relates to an isolated converter (10), in particular an LLC converter, comprising: a galvanic isolation stage (11), a switching circuit (13) on a primary side of the galvanic isolation stage (11), wherein the switching circuit (13) comprises a first switch (S1) and a second switch (S2) and wherein a center point (15) between the first and the second switch (S1, S2) is connected to a resonant tank circuit and/ or a transformer of the isolated converter (10). The isolated converter (10) further comprises a control unit (12) configured to control the first and the second switch (S1, S2) to execute a number of switching sequences, wherein each switching sequence (21) comprises alternately activating and deactivating the first and second switch (S1, S2) for at least one time, such that the first switch (S1) is activated while the second switch (S2) is deactivated and vice versa. The control unit (12) is further configured to suspend the activation of the first and the second switch (S1, S2) for a time period between two consecutive switching sequences; wherein the control unit (12) is configured to adapt the duration of the time period based on a non-predefined operating parameter of the isolated converter (10).

## Description

### TECHNICAL FIELD OF THE INVENTION

The present invention relates to an isolated converter, in particular to an LLC converter. The invention further relates to a system for providing an electrical power supply which comprises an isolated converter and to a method for operating an isolated converter.

### BACKGROUND OF THE INVENTION

Isolated converters, such as resonant LLC converters, are power conversion devices that use a transformer to separate their input and output sides. This provides additional safety, as the output can be protected from interferences from the input side.

Isolated converters are often resonant converters which are preferably operated with a frequency close to their resonant frequency. A common method to change the output current or voltage is to modulate high frequency pulses of the resonant converter with a low frequency (LF) pulse width modulation PWM signal. By adjusting the duty cycle of the PWM signal, a reduction of the power transmitted by the converter, and thus the resulting current through the load can be achieved. In this way the converter can operate in a low load range.

However, operating isolated converters with a LF PWM signal can have major disadvantages, particularly the potential for lower efficiency under light load conditions. Under light load conditions, the switching frequency can become very high, which leads to increased switching losses. Additionally, LF PWM signals operate with fixed frequencies which give less possibilities for dynamic output voltage adaption. Further, the LF signal can induce voltage ripples in the output voltage of the converter.

### SUMMARY OF THE INVENTION

In view of the above, it is an object of the invention to overcome the above-mentioned drawbacks and disadvantages. In particular, it is an object to improve the power transmission in an isolated converter when supplying a low load.

The object is achieved by the features of the enclosed independent claims. Advantageous implementations of the present invention are further defined in the dependent claims.

According to a first aspect, the invention relates to an isolated converter, in particular an LLC converter. The isolated converter comprises: a galvanic isolation stage; a switching circuit on a primary side of the galvanic isolation stage; wherein the switching circuit comprises a first switch and a second switch connected in series, and wherein a center point between the first and the second switch is connected to a resonant tank circuit and/or a transformer of the isolated converter. The isolated converter further comprises a control unit configured to control the first and the second switch to execute a number of switching sequences, wherein each switching sequence comprises alternately activating and deactivating the first and second switch for at least one time, such that the first switch is activated while the second switch is deactivated, and vice versa; wherein the control unit is configured to suspend the activation of the first and the second switch for a time period between two consecutive switching sequences; wherein the control unit is configured to adapt the duration of the time period based on a preferably non-predefined operating parameter of the isolated converter.

This achieves the advantage that the power transmission from the primary to the secondary side of the converter can be adapted and, in particular, can be performed more energy efficient especially under light load conditions. For instance, the switching sequences can be performed in much faster succession than a LF PWM control which results in a more efficient energy transfer due to reduced switching losses and reduces voltage ripples on the output side.

Additionally, the time period between two consecutive switching sequences can be altered during operation which allows for a dynamic output current and/or dynamic output voltage control.

For instance, each switching sequence comprises alternately activating and deactivating the first and second switch for a determined number of times. Thereby, the activation times of the first and the second switch are preferably fixed and are carried out in full length for each switching operation. Thus, in contrast to an LF PWM control, there is no potential premature cutoff of an activation of the first or second switch at the end of a switching sequence (due to a PWM signal dropping to zero).

The operating parameter can be an electrical quantity which occurs during operation of the converter, in particular a midpoint voltage of the switching circuit. This quantity may not be predefined and may depend on the operating conditions (e.g., input voltage, load, etc.) of the converter. This is another difference to an LF PWM control, where a predefined PWM signal with a certain, predefined LF frequency is used to control the time durations at which HF switching takes place.

The isolated converter can be a DC/DC converter which converts a DC signal to a DC output signal of a different voltage level. More specifically, the isolated converter may be an LLC converter (also referred to as: resonant LLC converter).

The switching circuit can be a half bridge circuit, wherein the first switch is a high side switch and the second switch is a low side switch of the half bridge circuit. The switching circuit can be configured to receive an input voltage, e.g. a DC voltage or a rectified AC voltage, and to adapt said input voltage based on the switching operation.

In particular, a switch being active means it is switched on, and a switch being deactivated means it is switched off. The first and second switches can be MOSFETs (metal-oxide-semiconductor field-efficient transistors) which are controlled by the control unit via a control signal.

The switches can be alternately activated and deactivated during a switching sequence with a high frequency (HF). For instance, the control unit controls the operation of the first and second switch during each switching sequence by means of a respective HF PWM (high frequency pulse width modulation) signal.

The time period between two consecutive switching sequences can be a so-called 'break time'. During this time period both the first and the second switch are deactivated. Adapting this time period (break time) between two switching sequences changes an effective duty cycle of the switching circuit and thus the current drawn by the converter during the switching sequences.

The control unit can be configured to suspend the activation of the first and the second switch for the time period between each two consecutive switching sequences of the number of switching sequences. The control unit can adapt the duration of the time period between two, in particular between each two, consecutive switching sequences based on the non-predefined operating parameter.

The control unit can be a microprocessor, an FPGA, or an integrated circuit, such as an ASIC.

The galvanic isolation stage can be implemented by a transformer of the converter. The transformer may comprise primary windings on a primary side and at least one secondary winding on a secondary side of the isolation stage, and a magnetic core coupling the primary and secondary windings, wherein there is no direct electrical connection between the primary and secondary windings.

In an implementation form of the first aspect, the time period is longer than a time interval between a deactivation of the first switch and subsequent activation of the second switch, or vice versa, within a switching sequence, and/or the time period between two consecutive switching sequences is longer than an activation time of the first or the second switch within a switching sequence. In addition or alternatively, the time period between two consecutive switching sequences is longer than a subsequent activation and deactivation of the first and the second switch within a switching sequence, and/ or the time period between two consecutive switching sequences is longer than an individual switching sequence.

In an implementation form of the first aspect, the time period has a duration that is at least a predetermined minimum value.

The duration of the time period between two consecutive switching sequences can be altered/ changed during an operation of the converter. This provides the advantage that the output current and/or output voltage can be adapted during the operation of the converter, e.g. to adapt to changing power demands.

In an implementation form of the first aspect, the control unit is configured to determine the starting point of at least one of the switching sequences based on a voltage at the center point between the first and the second switch, wherein said voltage oscillates during the time period between two switching sequences. Advantageously, in this way the control unit can determine an ideal starting point of each of the number of switching sequences.

The voltage at the center point (also referred to as: midpoint voltage) can be forwarded to the resonant tank circuit and/or transformer. The midpoint voltage can correspond to the voltage over the second switch (low-side switch).

In an implementation form of the first aspect, the control unit is configured to start the at least one switching sequence when the voltage at the center point reaches a local maximum or a local minimum. This gives the advantage of avoiding switching losses.

In an implementation form of the first aspect, the control unit is configured to start the at least one switching sequence by activating the first switch when the voltage at the center point reaches a local maximum.

In an implementation form of the first aspect, the control unit is configured to start the at least one switching sequence by activating the second switch when the voltage at the center point reaches a local minimum.

In an implementation form of the first aspect, the control unit is configured to monitor the voltage at the center point. This achieves the advantage that the time period between switching sequences can be adapted based on a suitable (non-predefined) operating parameter, in particular based on a real-time measurement of the midpoint voltage.

In an implementation form of the first aspect, an input of the control unit is directly or indirectly connected to the center point between the first and the second switch and/or the resonant tank circuit. Further, the control unit is configured to receive a sensing signal representing the voltage at the center point at the input and to monitor said voltage based on the sensing signal. This achieves the advantage that an optimal starting point of the at least one switching sequence can be determined based on the sensing signal. Monitoring the sensing signal can have the additional advantage to have an analyzing tool in case of malfunction of the converter.

In an implementation form of the first aspect, the control unit is configured to determine the starting point of the at least one switching sequence based on the end point of the preceding switching sequence and a known periodicity of the oscillating voltage at the center point. Hence, advantageously, the midpoint voltage is not required to be monitored in order to determine the starting point of the at least one switching sequence. Thus, this allows for a less complex circuit which could also be more cost efficient.

According to a second aspect, the present invention relates to a system comprising an isolated converter of any one of the preceding claims and at least one voltage-reducing stage, in particular a Buck converter, which is connected to an output of the isolated converter on a secondary side of its isolation stage.

The converter and voltage-reducing stage can form an electrical power supply.

In an implementation form of the second aspect, the present invention relates to a system further comprising a load which is supplied with electrical power from the isolated converter and the voltage-reducing stage.

The load can be a high current draw load which requires a relatively low DC supply voltage, for example a GPU (graphics processing unit).

According to a third aspect, the present invention relates to a method for operating an isolated converter, in particular an LLC converter, wherein the isolated converter comprises a galvanic isolation stage, and a switching circuit on a primary side of the galvanic isolation stage, wherein the switching circuit comprises a first switch and a second switch connected in series, and wherein a center point between the first and the second switch is connected to a resonant tank circuit and/or a transformer of the isolated converter. The method comprises: controlling the first and the second switch to execute a number of switching sequences, wherein each switching sequence comprises alternately activating and deactivating the first and second switch for at least one time, such that the first switch is activated while the second switch is deactivated, and vice versa; and suspending the activation of the first and the second switch for a time period between two consecutive switching sequences; and adapting the duration of the time period based on a preferably non-predefined operating parameter of the isolated converter.

The method according to the third aspect of the invention can be used to operate the isolated converter to the first aspect of the invention.

In an implementation form of the third aspect, the method further comprises to determine the starting point of the at least one of the switching sequences based on a voltage at the center point between the first and the second switch, wherein said voltage oscillates during the time period between two switching sequences.

In an implementation form of the third aspect, the method further comprises to monitor the voltage at the center point and/or determine the starting point of the at least one switching sequence based on the end point of the preceding switching sequence and a known periodicity of the oscillating voltage at the center point.

### BRIEF DESCRIPTION OF THE DRAWINGS

Exemplary embodiments of the invention are now further explained with respect to the drawings by way of example only, and not for limitation. In the drawings:
- Fig. 1: shows a schematic diagram of an isolated converter according to an embodiment;
- Figs. 2-4: show a graphical representation of operating and control parameters of an isolated converter according to an embodiment;
- Fig. 5: shows a schematic diagram of a system according to an embodiment; and
- Fig. 6: shows a flow diagram of a method for operating an isolated converter 10 according to an embodiment.

### DETAILED DESCRIPTION OF EMBODIMENTS

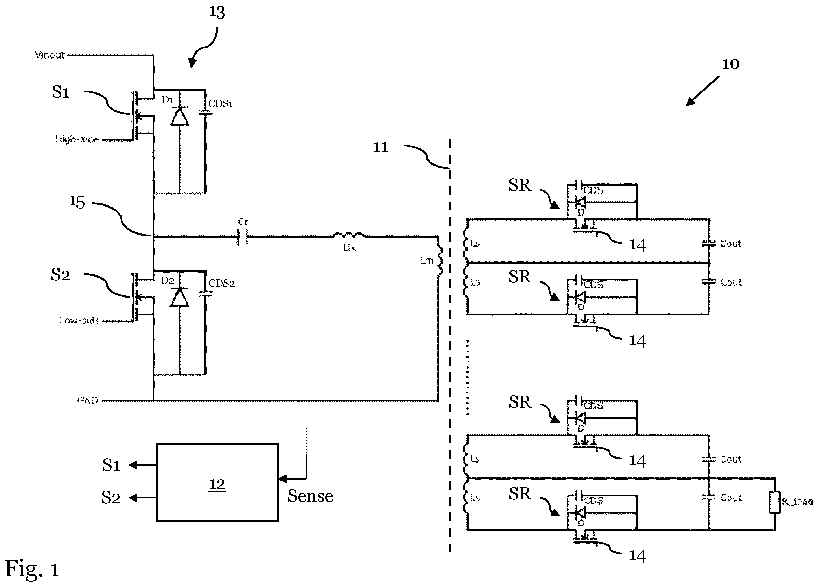

Fig. 1 shows a schematic diagram of an isolated converter 10 according to an embodiment.

The isolated converter 10, in particular a LLC converter 10, comprises: a galvanic isolation stage 11 and a switching circuit 13 on a primary side of the galvanic isolation stage 11, and wherein the switching circuit 13 comprises a first switch S1 and a second switch S2 connected in series, and wherein a center point 15 between the first and the second switch S1, S2 is connected to a resonant tank circuit and/or a transformer of the isolated converter 10. The isolated converter 10 further comprises a control unit 12 configured to control the first and the second switch S1, S2 to execute a number of switching sequences, wherein each switching sequence comprises alternately activating and deactivating the first and second switch S1, S2 for at least one time, such that the first switch S1 is activated while the second switch S2 is deactivated, and vice versa; and wherein the control unit 12 is configured to suspend the activation of the first and the second switch S1, S2 for a time period between two consecutive switching sequences; and wherein the control unit 12 is configured to adapt the duration of the time period based on an operating parameter, in particular a non-predefined operating parameter, of the isolated converter 10.

Thereby, the time period between two consecutive switching sequences, in particular between each two consecutive switching sequences, can be altered during operation of the converter 10 which allows for a dynamic output current and/ or dynamic output voltage control. For instance, each switching sequence comprises alternately activating and deactivating the first and second switch S1, S2 for a determined number of times. Thereby, the activation times of the first and second switch S1, S2 are preferably fixed and are carried out in full length for each switching operation. Thus, in contrast to an LF PWM control, there is no potential premature cutoff of an activation of the first or second switch S1, S2 at the end of a switching sequence (due to a PWM signal dropping to zero).

In this way, the power transmission from the primary to the secondary side of the converter 10 during the at least one switching sequence can be adapted and, in particular, made more energy efficient over the duration of the sequence, as will be explained in more detail below.

The isolated converter 10 can be a DC/DC converter which converts a DC input signal to a DC output signal of a different voltage level. As shown in Fig. 1, the isolated converter 10 may be an LLC converter (also referred to as: resonant LLC converter). The isolated converter 10 may be an intermediate bus converter.

The converter 10 can operate over a wide load range. For instance, the nominal power of the converter is 1.5 kW and the load can be adjusted between 1% and 100%.

The switching circuit 13 may be a half bridge circuit, wherein the first switch S1 is a high side switch and the second switch S2 is a low side switch of the half bridge circuit. The switching circuit 13 can be configured to receive an input voltage Vᵢₙₚᵤₜ, e.g. a DC voltage or a rectified AC voltage, and to adapt said input voltage based on the switching operation.

The first and second switches S1, S2 can be MOSFETs which are controlled by the control unit 12 via a respective control signal, as indicated by the outgoing arrows labeled S1, S2.

The switching circuit 13 may further comprise a respective diode D1, D2 and a capacitor CDS1, CDS2 connected in parallel to the switches S1, S2.

In particular, a switch being active means it is switched on, and a switch being deactivated means it is switched off.

During each switching sequence, the switches S1, S2 may be alternately activated and deactivated with a high frequency (HF). For instance, the control unit 12 controls the operation of the first and the second switch S1, S2 during each switching sequence by means of a respective HF PWM (high frequency pulse width modulation) signal.

The time period between two consecutive switching sequences can be a so-called 'break time'. During this time period both the first and the second switch S1, S2 are deactivated. Adapting this time period (break time) between two switching sequences changes an effective duty cycle of the switching circuit and thus the current drawn by the converter during the switching sequences.

The control unit 12 can be configured to suspend the activation of the first and the second switch S1, S2 for the time period between each two consecutive switching sequences of the number of switching sequences. The control unit 12 can adapt the duration of the time period between two, in particular between each two, consecutive switching sequences based on the non-predefined operating parameter (e.g. midpoint voltage).

The control unit 12 can adapt the time period between two consecutive switching sequences to be longer than at least one of: a time interval between a deactivation of the first switch S1 and subsequent activation of the second switch S2, or vice versa, within a switching sequence; an activation time of the first or the second switch S1, S2 within a switching sequence; a subsequent activation and deactivation of the first and the second switch S1, S2 within a switching sequence; or an individual switching sequence of the number of switching sequences.

In particular, the control unit 12 can set the time period time period to have a duration that is at least a predetermined minimum value.

The control unit 12 can be an integrated circuit (IC), e.g. an ASIC, an FPGA, a microcontroller, or a different type of control circuit.

The control unit 12 can have an input to receive the sensing signal and two outputs to control both switches S1, S2.

The galvanic isolation stage 11 can be implemented or formed by the transformer of the converter 10. The galvanic isolation stage 11 may define a primary and a secondary side of the converter 10 with the switching circuit and resonant tank being arranged on the primary side and the converter output being arranged on the secondary side of the isolation stage 11.

The transformer may comprise a primary winding Lm on the primary side and at least one secondary winding Ls on the secondary side of the isolation stage 11, and a magnetic core coupling the primary and secondary windings Lm, Ls, wherein there is no direct electrical connection between the primary and secondary windings Lm, Ls.

The transformer of the isolated converter 10 can be a matrix transformer. A matrix transformer is a special kind of transformer which can comprise a plurality of transformer elements, e.g. multiple cores, arranged in a specific pattern (e.g., along an axis).

For instance, the transformer of the converter 10 may comprise a PCB. The primary windings Lm and/or the secondary windings Ls can be formed by conductive lines on the PCB. Thus, the transformer can be a planar transformer. The conductive lines forming the primary and secondary windings Lm, Ls may be arranged in multiple layers on top of each other on the PCB. The conductive lines forming a single primary or secondary winding Ls, Lm can be arranged on one layer or on multiple layers on top of each other.

The isolated converter 10, in the LLC design, can further comprise the resonant tank comprising a resonant capacitor Cr and a resonant inductance Llk which are connected to the primary windings Lm. Furthermore, a magnetizing inductance can arise from the primary winding Lm.

The isolated converter 10 can further comprise a plurality of rectification circuits SR on the secondary side of the isolation stage 11. Thereby, each secondary winding Ls can be connected to one of the rectification circuits SR.

Each rectification circuit SR may comprise a controllable switch 14. In this way, active and/or synchronous rectification can be performed by the rectification circuits SR. For instance, each rectification circuit further comprises a diode D and a capacitor CDS connected in parallel to the switch 14.

The converter 10 can further comprise a number of output capacitors Cout which can smooth the output voltage before forwarding it to a load R_load. The load R_load can be supplied by said output voltage. The load can be an electrical device or a further circuit stage.

In the example shown in Fig. 1, the load is connected in parallel to a single output capacitor Cout. However, the plurality of output capacitors Cout of the converter could also be connected in parallel to supply the output voltage to the load R_load.

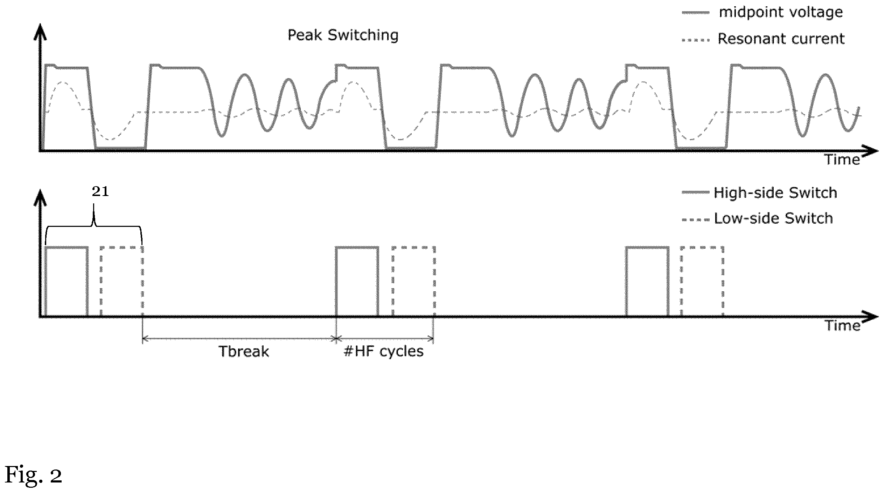

Figures 2-4 show a graphical representation of operating and control parameters of an isolated converter 10 according to an embodiment.

The upper graph in each of Figs. 2-4 shows a representative run of two operating parameters, namely the midpoint voltage and corresponded resonant current of the converter 10. The lower graph shows control signals for controlling the activation and deactivation of the switches S1, S2 over time. Hereby, the first switch S1 is the high-side switch and the second switch S2 is the low-side switch.

The switches S1, S2 can be alternatively activated and deactivated during a switching sequence 21. For instance, the control unit 12 controls the operation of the first and second switch S1, S2 during each switching sequence 21 by means of a respective HF PWM signal. The time period between two consecutive switching sequences can be a so-called 'break time', T_break. During this time period both the first and the second switch S1, S2 are deactivated. Adapting this time period (break time) between two switching sequences changes an effective duty cycle of the switching circuit 13 and thus the current drawn by the converter during the switching sequence 21.

The control unit 12 can be configured to suspend the activation of the first and the second switch S1, S2 (of vice versa) for the time period (i.e., the break time; T_break) between each two consecutive switching sequences of the number of switching sequences. The control signals can be forwarded by the control unit 12 to respective gates of these switches. Each subsequent activation of the first and the second switch S1, S2 (or vice versa) within the switching sequence 21 may be referred to as an 'HF cycle', as indicated in Fig. 2. Thus, in the example shown in Fig. 2 one switching sequence 21 corresponds to one HF cycle.

The control unit 12 can adapt the duration of the time period T_break between two, in particular between each two, consecutive switching sequences based on the non-predefined operating parameter. For example, the non-predefined operating parameter is the midpoint voltage, i.e., the voltage at the center point 15 between the first and the second switch S1, S2 in Fig. 1 (which corresponds to the voltage across the second switch S2 in Fig. 1).

The control unit 12 may be configured to determine the starting point of at least one of the switching sequences based on the midpoint voltage, wherein said midpoint voltage oscillates during the time period between two switching sequences, as shown in Figs. 2-4. Advantageously, in this way the control unit 12 can determine an ideal starting point of each of the number of switching sequences and each HF cycle can be carried out in full length. This gives an advantage compared to a conventional LF PWM operation, where it can happen that a HF cycle is cut off at the end of a LF PWM which results in nonlinear energy transfer characteristics.

A starting point of the at least one switching sequence 21 may be set when the midpoint voltage reaches a local peak, e.g., a local maximum or local minimum. In particular, the control unit 12 is configured to start the at least one switching sequence 21 by activating the first switch S1 when the midpoint voltage reaches a local maximum. Alternatively, the control unit 12 may be configured to start the at least one switching sequence 21 by activating the second switch when the midpoint voltage reaches a local minimum. This can reduce switching losses.

Figure 2 shows one completely performed HF cycle followed by a break time, e.g. one micro second. During this time period (break time) both switches S1, S2 are deactivated and at least one HF cycle is 'skipped'. The next HF cycle is performed after the break time and the first switch is activated in correlation with the midpoint voltage (at a local maximum).

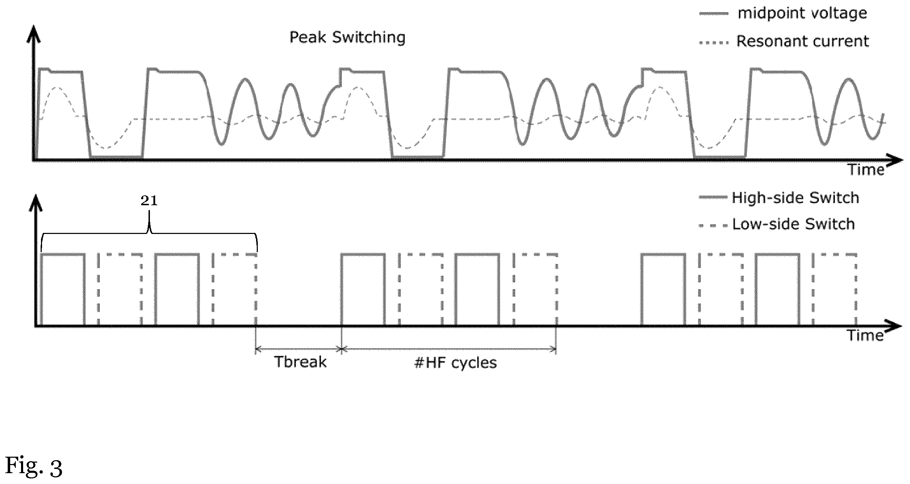

Figure 3 shows an example with a shorter break time, e.g. 0.5 micro seconds. Two complete HF cycles are performed in each switching sequence 21 followed by the break time. Thereby, each switching sequence 21 is started by activating the first switch S1 (high-side) in correspondence with the midpoint voltage reaching a local maximum.

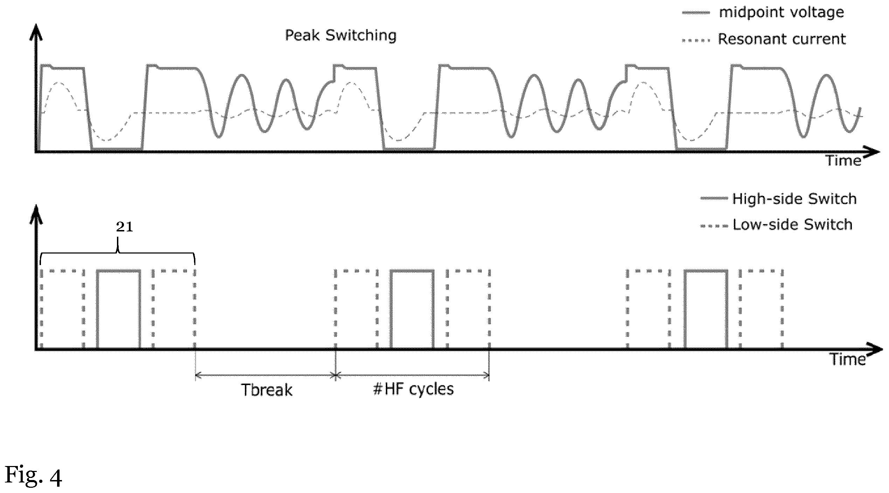

In comparison, figure 4 shows a switching sequence 21 beginning with the second switch S2 being activated. Here, each switching sequence 21 starts by activating the second switch S2 (low side) when the midpoint voltage reaches a local minimum (also referred to as: Valley Switching). One and a half HF cycles are thereby performed in each switching sequence 21 with a break time of e.g. 0.75 micro seconds.

The control unit 12 can be configured to monitor the midpoint voltage which makes it possible to adapt the time period between switching sequences based on a suitable, non-predefined operating parameter, in particular based on a real-time measurement of the midpoint voltage. Advantageously, in this way the output current and/ or voltage can adapt to changing energy demands.

An input of the control unit 12 may be directly or indirectly connected to the central point 15 between the first and the second switch S1, S2 and/ or the resonant tank circuit. The control unit 12 can be configured to receive a sensing signal representing the voltage at the center point 15 (so-called midpoint voltage) at the input and to monitor said midpoint voltage based on the sensing signal. The input (labeled "Sense" in Fig. 1) can be a pin of the control unit 12.

In addition or alternatively, the control unit 12 may be configured to determine the starting point of the at least one switching sequence 21 based on the end point of the preceding switching sequence and a known periodicity of the oscillating voltage at the center point 15. In this way, the midpoint voltage is not required to be monitored. Thus, no sensing needs to be carried out and a less complex circuit is needed which could also be more cost efficient.

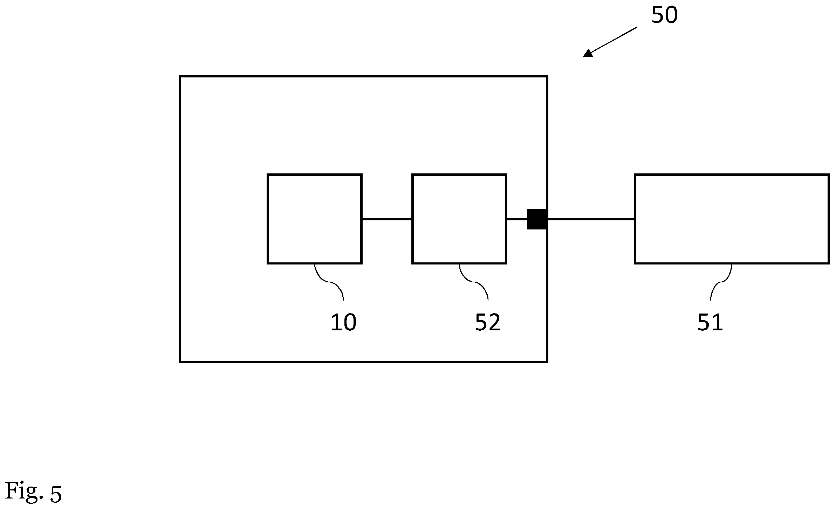

Fig. 5 shows a schematic diagram 50 of a system according to an embodiment, wherein the system comprises the isolated converter 10 (as e.g. shown in Fig. 1) and at least one voltage-reducing stage 52, in particular a Buck converter, which is connected to an output of the isolated converter 10 on a secondary side of its isolation stage 11. The voltage-reducing stage 52 can reduce an output voltage of the isolated converter 10.

The system 50 can provide an electrical power supply to a connected load 51. The load 51 could also be a component of the system.

The load 51 can be a high current draw load which requires a relatively low DC supply voltage, e.g. a GPU in a datacenter. The load 51 could also comprise an LED luminaire.

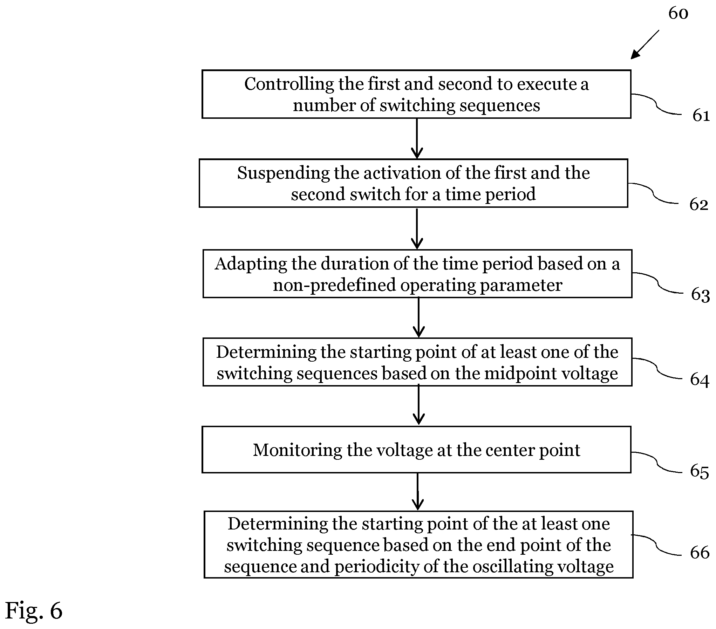

Fig. 6 shows a flow diagram 60 of a method for operating an isolated converter 10, in particular a LLC converter, according to an embodiment.

Thereby, the isolated converter 10 can be a converter as shown in Fig. 1, which comprises the galvanic isolation stage 11 and a switching circuit 13 on a primary side of the galvanic isolation stage 11, wherein the switching circuit 13 comprises a first switch and a second switch S1, S2 connected in series, and wherein a center point 15 between the first and the second switch S1, S2 is connected to a resonant tank circuit and/or a transformer of the isolated converter 10.

The method comprises the steps of: controlling 61 the first and the second switch S1, S2 to execute a number of switching sequences 21, wherein each switching sequence 21 comprises alternately activating and deactivating the first and second switch S1, S2 for at least one time, such that the first switch S1 is activated while the second switch S2 is deactivated, and vice versa; suspending 62 the activation of the first and the second switch S1, S2 for a time period between two consecutive switching sequences; and adapting 63 the duration of the time period based on a preferably non-predefined operating parameter of the isolated converter 10.

The method may further comprise determining 64 the starting point of at least one of the switching sequences based on a voltage at the center point 15 between the first and the second switch S1, S2; wherein said voltage oscillates during the time interval between two switching sequences.

Additionally, the method may comprise: Monitoring 65 the voltage at the center point 15; and/or determining 66 the starting point of the at least one switching sequence 21 based on the end point of the preceding switching sequence 21 and a known periodicity of the oscillating voltage at the center point 15.

While various embodiments of the present invention have been described above, it should be understood that they have been presented by way of example only, and not by limitation. Numerous changes to the disclosed embodiments can be made in accordance with the disclosure herein without departing from the spirit or scope of the invention. Thus, the breadth and scope of the present invention should not be limited by any of the above-described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. An isolated converter (10), in particular an LLC converter, comprising:
a galvanic isolation stage (11);
a switching circuit (13) on a primary side of the galvanic isolation stage (11);
wherein the switching circuit comprises a first switch (S1) and a second switch (S2) connected in series;
wherein a center point (15) between the first and the second switch (S1, S2) is connected to a resonant tank circuit and/or a transformer of the isolated converter (10);
a control unit (12) configured to control the first and the second switch (S1, S2) to execute a number of switching sequences, wherein each switching sequence (21) comprises alternately activating and deactivating the first and second switch (S1, S2) for at least one time, such that the first switch (S1) is activated while the second switch (S2) is deactivated, and vice versa;
wherein the control unit (12) is configured to suspend the activation of the first and the second switch (S1, S2) for a time period between two consecutive switching sequences;
wherein the control unit (12) is configured to adapt the duration of the time period based on a preferably non-predefined operating parameter of the isolated converter (10).

2. The isolated converter (10) of claim 1,
wherein the time period between two consecutive switching sequences is longer than a time interval between a deactivation of the first switch (S1) and subsequent activation of the second switch (S2), or vice versa, within a switching sequence (21); and/or
wherein the time period between two consecutive switching sequences is longer than an activation time of the first or the second switch (S1, S2) within a switching sequence (21); and/or
wherein the time period between two consecutive switching sequences is longer than a subsequent activation and deactivation of the first and the second switch (S1, S2) within a switching sequence (21); and/or
wherein the time period between two consecutive switching sequences is longer than an individual switching sequence (21).

3. The isolated converter (10) of claim 1 or 2,
wherein the time period has a duration that is at least a predetermined minimum value.

4. The isolated converter (10) of any one of the preceding claims,
wherein the control unit (12) is configured to determine the starting point of at least one of the switching sequences based on a voltage at the center point (15) between the first and the second switch (S1, S2);
wherein said voltage oscillates during the time period between two switching sequences.

5. The isolated converter (10) of claim 4,
wherein the control unit (12) is configured to start the at least one switching sequence (21) when the voltage at the center point (15) reaches a local maximum or a local maximum.

6. The isolated converter (10) of claim 4 or 5,
wherein the control unit (12) is configured to start the at least one switching sequence (21) by activating the first switch (S1) when the voltage at the center point (15) reaches a local maximum.

7. The isolated converter (10) of claim 4 or 5,
wherein the control unit (12) is configured to start the at least one switching sequence (21) by activating the second switch (S2) when the voltage at the center point (15) reaches a local minimum.

8. The isolated converter (10) of any one of claims 4 to 7,
wherein the control unit (10) is configured to monitor the voltage at the center point (15).

9. The isolated converter (10) of claim 8,
wherein an input of the control unit (12) is directly or indirectly connected to the center point (15) between the first and the second switch (S1, S2) and/or to the resonant tank circuit;
wherein the control unit (12) is configured to receive a sensing signal representing the voltage at the center point (15) at the input and to monitor said voltage based on the sensing signal.

10. The isolated converter (10) of any one of any one of claims 4 to 9,
wherein the control unit (12) is configured to determine the starting point of the at least one switching sequence (21) based on the end point of the preceding switching sequence (21) and a known periodicity of the oscillating voltage at the center point (15).

11. A system (50), comprising:
the isolated converter (10) of any one of the preceding claims, and
at least one voltage-reducing stage (52), in particular a Buck converter, which is connected to an output of the isolated converter (10) on a secondary side of its isolation stage (11).

12. The system (50) of claim 11, further comprising:
a load (51) which is supplied with electrical power from the isolated converter (10) and the voltage-reducing stage (52).

13. A method (60) for operating an isolated converter (10), in particular an LLC converter, wherein the isolated converter (10) comprises a galvanic isolation stage (11), and a switching circuit (13) on a primary side of the galvanic isolation stage (11), wherein the switching circuit (13) comprises a first switch (S1) and a second switch (S2) connected in series, and wherein a center point (15) between the first and the second switch (S1, S2) is connected to a resonant tank circuit and/or a transformer of the isolated converter (10), the method comprising:
controlling (61) the first and the second switch (S1, S2) to execute a number of switching sequences, wherein each switching sequence (21) comprises alternately activating and deactivating the first and second switch (S1, S2) for at least one time, such that the first switch (S1) is activated while the second switch (S2) is deactivated, and vice versa; and
suspending (62) the activation of the first and the second switch (S1, S2) for a time period between two consecutive switching sequences;
adapting (63) the duration of the time period based on a preferably non-predefined operating parameter of the isolated converter (10).

14. The method (60) of claim 13, further comprising:
determining (64) the starting point of at least one of the switching sequences based on a voltage at the center point (15) between the first and the second switch (S1, S2);
wherein said voltage oscillates during the time period between two switching sequences.

15. The method (60) of claim 14, further comprising:
monitoring (65) the voltage at the center point (15); and/or
determining (66) the starting point of the at least one switching sequence (21) based on the end point of the preceding switching sequence (21) and a known periodicity of the oscillating voltage at the center point (15).
